# EUROPEAN PATENT APPLICATION

(11) **EP 2 451 188 A2**
(43) Date of publication of application: **09.05.2012**
(21) Application number: 11185664.7
(22) Date of filing: 18.10.2011
(51) Int. Cl.: H04R 1/10

(54) **Using accelerometers for left right detection of headset earpieces**

(30) Priority: 05.11.2010 US 410741 P; 21.01.2011 US 11050
(71) Applicant: Sony Ericsson Mobile Communications AB, 221 88 Lund (SE)
(72) Inventor: Abrahamsson, Magnus, 246 50 LÖDDEKÖPINGE (SE)
(74) Representative: VALEA AB

(57) **Abstract**

An earplug (1) to provide sounds to a user's ear includes a housing (7), a speaker (8) in the housing (7), a reference location or direction indicator associated with the housing to identify a preferential orientation of the housing (7) in a user's ear, and an accelerometer (5) configured to provide an output signal to distinguish and/or to identify in which ear respective earplugs are located. A method to distinguish and/or to identify in which ear respective earplugs are located includes orienting the earplugs in respective ears based on a reference, and using accelerometers to provide output signals distinguishing the left and right positioning of the respective earplugs.

## Description

### TECHNICAL FIELD

The present invention relates generally to automatically detecting at which ears the earpieces of an audio headset are located, to using accelerometers for left right detection of headset earpieces, and, more particularly, to a headset and method used in small listening devices, such as, for example, ear buds or the like, and the automatic adjusting of sounds provided the listening devices based on location in which respective ears.

### BACKGROUND

Mobile and/or wireless electronic devices are becoming increasingly popular. For example, mobile telephones, portable media players and portable gaming devices are now in wide-spread use. In addition, the features and accessories associated with certain types of electronic devices have become increasingly diverse. To name a few examples, many electronic devices have cameras, text messaging capability, Internet browsing capability, electronic mail capability, video playback capability, audio playback capability, image display capability and handsfree headset interfaces. Exemplary accessories may also include headsets to provide sounds, e.g., music or other audio content, music and video input players, etc.

In many use cases, especially in combination with 3D audio, surround sound, stereophonic sound, or binaural audio, it is important that the user has the correct earpiece (sometimes referred to as earplug, earbud, earphone, headphone, or the like) in each ear so that the correct sounds are played to the correct respective ears. A problem would occur if the user would mix up the earplugs and insert them the wrong way (the right earpiece in the left ear and vice versa). The audio effects will be reduced in that case or may even sound very strange. For music, the effect of reversed placement is not so great unless the listener is very familiar with the original sound. For video viewing it will be annoying that picture and sound are not consistent, e.g., the sound playing to the left ear of a viewer being the voice of a speaking person who appears at the right side of an image shown on a display or the like. For navigation, the user may be totally misled.

### SUMMARY

An aspect of the invention relates to a method to determine which earplug is inserted in which ear by use of accelerometers. The earplugs can be made identical, and the user will not have to think about which is the right and which is the left side earplug.

An aspect of the invention relates to apparatus to determine which earplug of an audio headset is inserted in which ear by use of accelerometers. The earplugs can be made identical, and the user will not have to think about which is the right and which is the left side earplug.

An aspect of the invention relates to an earplug capable of indicating in which ear of a user it is inserted.

According to another aspect, the earplug includes a physical reference to indicate a preferred orientation for positioning with respect to an ear and, when the earplug is positioned in the preferred orientation, an accelerometer provides a signal having a characteristic representative of the respective ear in which the earplug is located.

An aspect of the invention relates to an audio headset with earpieces that indicate at which ear they respectively are located.

According to another aspect, the system will automatically adjust the audio channels, so that the correct audio channel is played to each ear.

Another aspect relates to improving with ease user experience for complex sounds, such as 3D audio, surround sound, binaural sound, or stereophonic sound.

Another aspect relates to an earplug, including a housing positionable with respect to the ear of a user, a speaker positioned with respect to the housing to provide sounds to the ear of a user, an accelerometer positioned with respect to the housing and configured to sense a predetermined direction, the housing configured to facilitate the tendency for a user to position the housing with respect to an ear with a portion of the housing facing a predetermined direction or having a preferred orientation (sometimes referred to herein as preferential direction, preferred direction or reference or reference direction to distinguish from the predetermined direction sensed by the accelerometer), whereby the relation of the predetermined direction to the preferential direction with respect to an ear is indicative of the left or right ear with respect to which the housing is positioned.

According to another aspect, the preferential direction or orientation of the earplug with respect to an ear is indicated by positioning of a wire or electrical cable during use of the earplug.

According to another aspect, the preferential direction or orientation of the earplug with respect to an ear is indicated by positioning of a feature of or on the earplug.

According to another aspect the predetermined direction sensed by the accelerometer is downward.

According to another aspect, the predetermined direction is due to gravity.

According to another aspect, the preferential direction is generally in a forward direction relative to the ear and/or head of a user.

According to another aspect, the earplug includes a microphone.

According to another aspect, the predetermined direction is facing generally forward of the ear without regard to which ear.

Another aspect relates to an earplug comprising a housing positionable with respect to the ear of a user, a speaker positioned with respect to the housing to at least one of provide sounds to the ear of a user, an accelerometer positioned with respect to the housing and configured to sense a predetermined direction, and an electrical cable exiting the housing and configured to facilitate the tendency for a user to position the housing with respect to an ear with the electrical cable facing a predetermined direction, whereby the relation of the downward direction to the predetermined direction with respect to an ear is indicative of the left or right ear with respect to which the housing is positioned.

Another aspect relates to an earplug of a headset, including a housing positionable with respect to the ear of a user, a speaker positioned with respect to the housing to provide sounds to the ear of a user, an accelerometer positioned with respect to the housing and configured to sense a predetermined direction, the housing configured to facilitate the tendency for a user to position the housing with respect to an ear with a portion of the housing facing a preferential direction to distinguish from the predetermined direction, whereby the relation to the predetermined direction to the preferential direction with respect to an ear is indicative of the left or right ear with respect to which the housing is positioned in comparison to a similar earplug similarly in position with respect to the other ear of the user.

Another aspect relates to an earplug, including a housing positionable with respect to the ear of a user, a speaker positioned with respect to the housing to provide sounds to the ear of a user, an accelerometer positioned with respect to the housing and configured to sense a predetermined direction, an electrical cable exiting the housing and configured to facilitate the tendency for a user to position the hosing with respect to an ear with the electrical cable facing a preferential direction to distinguish from the predetermined direction sensed by the accelerometer, whereby the relation of the predetermined direction to the preferential direction with respect to an ear is indicative of the left or right ear with respect to which the housing is positioned in comparison to a similar earplug similarly in position with respect to the other ear of the user.

According to another aspect, the earplug further comprises a source of signals to provide sounds from one or more earplugs.

According to another aspect, the source of signals is an audio player.

According to another aspect, the source of signals is a mobile phone.

Another aspect relates to a self contained earplug, comprising a housing, operating circuitry, a speaker, a control configured to control operation of the operating circuitry to provide signals to cause the speaker to produce output sounds, the housing including a device to retain the earplug with respect to an ear of a user, and a connection to a source of signals to produce such output sounds.

Another aspect relates to an earplug accessory including a pair of earplugs, e.g., as above, and including a processor configured to determine automatically the directing or coupling signals representative of sounds to the respective earplugs.

Another aspect relates to a source of audio content, and wherein the processor is configured to provide signals to the respective earplugs to provide a stereophonic effect with right ear stereo sounds delivered by the right side earplug and left ear stereo sounds delivered by the left earplug.

According to another aspect, the accelerometer of each earplug is positioned in substantially the same location and orientation in the housing of each respective earplug.

According to another aspect, a method of determining which of two earplugs is positioned at which respective ear of a user, includes positioning each of the earplugs at an ear such that at least a prescribed feature or part of the earplug or a wire attached to the earplug faces a predetermined direction, determining whether for at least one of the earplugs the direction of a downward direction is relatively to the right or to the left of the predetermined direction with the earplug in use position at an ear as a representation of whether the earplug is in the left ear or the right ear.

According to another aspect, the determining includes using an accelerometer in the earplug.

Another aspect relates to receiving signals to produce stereophonic sounds by the respective earplugs, and automatically determining to send right side stereophonic sounds to the earplug that is positioned at the right ear of a user and to send left side stereophonic sounds to the earplug that is positioned at the left ear of the user.

According to another aspect, a sound recording method includes placing each of a pair of earpieces of a headset in a respective left or right ear, automatically detecting which earpiece is in which ear, each earpiece including a microphone, the sounds recorded by respective microphones being identified with the respective left or right ear at which the sounds are received.

According to another aspect, a sound recording system includes a pair of earpieces positionable in or at respective ears of a user, an indicator indicating in or at which of the ears the earpieces are located, a microphone in each earpiece to receive sounds, and circuitry configured to identify respective ears at which the respective sounds are received.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate like or corresponding parts throughout the several views and may be used to designate like or similar parts in more than one embodiment.

### BRIEF DESCRIPTION OF THE DRAWINGS

In the annexed drawings:
Figs. 1A and 1 B are schematic illustrations of earplugs in respective left and right ears of a user person;
Figs. 2A and 2B are schematic illustrations showing the positive and negative angular relationship between a predetermined direction, e.g., gravity, sensed by accelerometers of the earplugs and a preferential direction as a reference related to orientation of the earplugs of Figs. 1A and 1B, respectively;
Fig. 3 is a schematic side elevation view of an earplug positioned with respect to the left ear of a user with a wire from the earplug facing forward relative to the ear and indicating a preferential or reference direction;
Fig. 4 is a schematic side elevation view of another embodiment of earplug having a protruding part (also referred to as protrusion) and positioned with respect to the left ear of a user with the protruding part facing forward relative to the ear and indicating a preferential or reference direction;
Fig. 5 is a schematic front elevation view of a headset including a pair of earplugs in the left and right ears, respectively, of a user;
Fig. 6 is a schematic view of a system for listening to sounds from two respective earplugs, the sounds being provided by a player, radio, etc.;
Fig. 7 is a schematic isometric illustration of a pair of earplugs arranged for insertion in the respective left and right ears of a user;
Fig. 8 is a schematic computer program flow chart or logic diagram illustrating an example of operation of a headset with a pair of earplugs;
Fig. 9 is a schematic computer program flow chart or logic diagram illustrating an example of a method of detecting respective left and right earplugs and setting a switch to direct proper signals to the respective earplugs;
Fig. 10 is a schematic illustration of a headset including a pair of self-contained earplugs; and
Fig. 11 is a schematic illustration of a portable electronic equipment, such as, for example, a mobile phone.

### DESCRIPTION

The interchangeable terms "electronic equipment" and "electronic device" include portable radio communication equipment. The term "portable radio communication equipment," which hereinafter is referred to as a "mobile radio terminal," as "portable electronic equipment," or as a "portable communication device," includes all equipment such as mobile telephones, audio and/or video media players, pagers, communicators, electronic organizers, personal digital assistants (PDAs), smartphones, portable communication apparatus, and others mentioned herein or may come into existence in the future, or the like.

In the present application, embodiments of the invention are described primarily in the context of a mobile telephone. However, it will be appreciated that the invention is not intended to be limited to the context of a mobile telephone and may relate to any type of appropriate electronic equipment, examples of which include a media player, a gaming device, a PDA, a computer, and others that are mentioned herein or that may come into existence in the future, etc.

Also, the terms earplug, earpiece, earphone, earbud, headphone and the like are used equivalently and interchangeably to refer to devices that provide sounds to a person's ear in response to received signals. An audio headset is referred to below a pair of earplugs or the like.

Briefly, one or more accelerometers in combination with the mechanical design of a headset earpiece is used to determine which ear of a user the earpiece is inserted in or positioned at or in proximity to.

In the drawings like reference numerals designate like parts in the several figures.

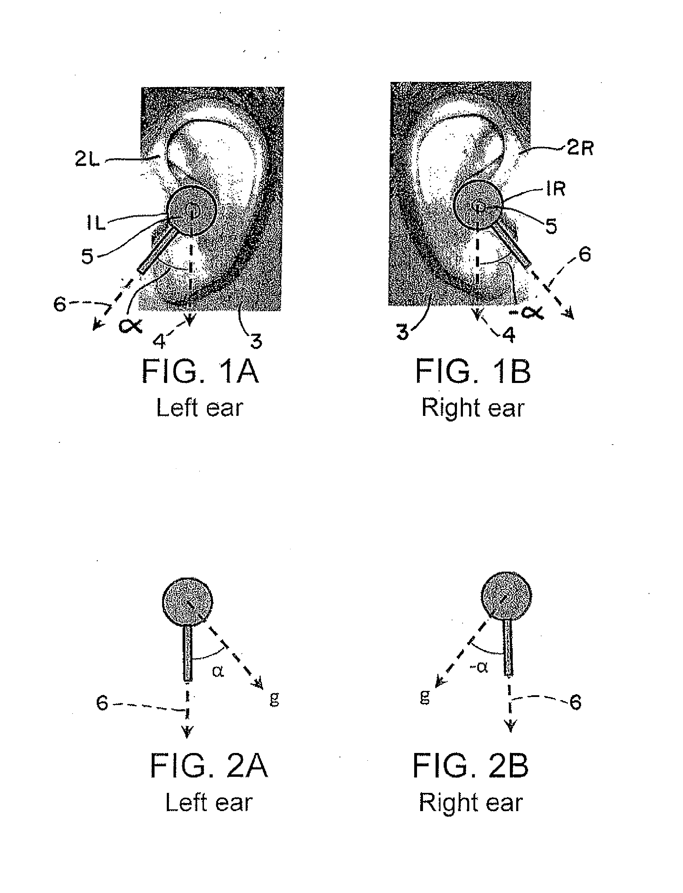

Initially reference is made to Figs. 1-7.

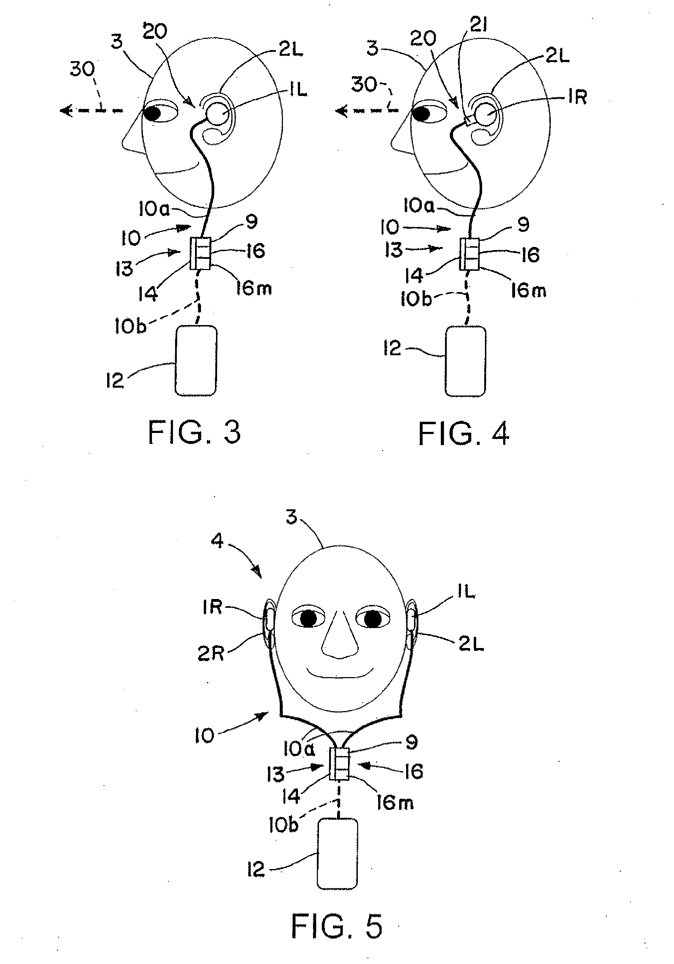

Figs. 1 A and 1 B illustrate a pair of earplugs 1, respectively designated 1 L and 1R, in the respective ears 2, respectively designated 2L and 2R, of a person 3 (see Figs. 3-5). The letters L and R refer to left and right ears or earplugs in the ears. Reference to earplug 1 or ear 2 means one or both earplugs or ears. Together the pair of earplugs 1 may be considered an audio headset 4 (Figs. 5-7) intended to provide sounds to the ears of the user. The earplugs 1 L, 1 R may be identical or substantially identical, e.g., the same form factor, mechanical and/or electrical structure and components, and so on, such that in use either earplug may be placed with respect to either ear of a user and may function to provide sounds designated for that ear. The terms "same" and "identical" also include substantially the same or substantially identical as used herein. As is described further below, each earplug automatically determines the respective left or right ear with respect to which it is positioned; based on that determination the correct sounds may be provided to the respective ear.

In Figs. 1A and 1B is shown an accelerometer 5 that is included in an earplug 1, and a dash line arrow 5a indicates a predetermined direction sensed by the accelerometer 5 in a respective earplug 1. The predetermined direction, for example, is the direction of acceleration due to gravity, e.g., the downward direction, and the arrow 5a represents a linear vector of gravity as sensed by the accelerometer. Since the earplugs 1 are identical, the location and orientation of the accelerometer 5 in each earplug is the same.

Each earplug 1 includes a feature as an indicator, mechanism or device that may be used to represent a reference direction or orientation for the earplug for properly orienting the earplug in position for use in or at a respective ear 2. In Figs. 1 and 2 the reference direction is represented by an arrow 6.

The reference direction also is referred to herein as reference, preferential direction or preferred direction, as it is a directional relation of an earplug when the earplug is inserted and/or located with a preferred or preferential orientation with respect to the ear.

The reference to in an ear, at an ear, in proximity to an ear, and the like may be used equivalently and interchangeably herein. The earplugs 1 may be at least partly inserted in an ear, such as partly in the ear canal, may be positioned at least partly adjacent and/or outside an ear, e.g., as earplugs that are suspended from a support that rests over the top of an ear between the ear and the side of a user's head or may be another structure or form factor.

In the embodiments below, the reference or preferential direction is a forward facing direction, e.g., facing toward the front of the face of the user. In a sense such forward facing direction may be considered one coordinate system in which the left ear and right ear positioning of respective earplugs of a headset may be determined. In an alternate embodiment a different coordinate system that may be used, for example, may be toward the back of the user's head, e.g., opposite the first-mentioned forward facing coordinate system.

Each earplug 1 includes a physical reference feature, which is described further below, to indicate a preferred orientation for positioning with respect to an ear 2, and when the earplug is positioned in the preferred orientation, the output from the accelerometer 5, e.g., accelerometer signal, has a characteristic, e.g., positive or negative sign, representative of the respective ear in which the earplug is located.

The relationship between the predetermined direction 5a sensed by the accelerometer 5 and the reference direction 6 is used to indicate or to identify in which ear respective earplugs are located. Using a coordinate system in which the reference direction for both earplugs 1 located in the ears 2 is forward, as is represented by the dash line arrow 6 in Figs. 1 and 2, the reference direction is the same, e.g., forward, for both earplugs 1L, 1 R. The accelerometers 5 are in the same or generally the same position and orientation in each of the earplugs 1 L, 1 R. Therefore, the angular relation alpha (∀) between predetermined direction 4 and preferential direction 6 is positive for one earplug and negative for the other earplug. In Figs. 1 and 2 the angular relation is shown by the angles plus alpha (+∀) and minus alpha (-∀). Thus, the accelerometers 5 provide respectively positive or negative output signals representing the relative angular relation or rotational relation between the predetermined direction and the reference or preferential direction. Those output signals represent information indicating in which ear the earplug is located.

Each earplug includes an earplug housing 7 in which the accelerometer 5, a speaker 8 and circuitry 9 are located. A wire 10 connection provides signals to the speakers 8 to cause the speakers to produce sounds to be heard by the respective ears. The wire 10 connection also may connect the output signal from the accelerometer 5 to the circuitry 9 and/or to other circuitry to provide a representation of the orientation of the accelerometer that can be used to identify the ear in which the earplug is located. The accelerometers 5 may be single axis accelerometers because they only have to determine the direction between gravity and the reference direction. If desired, though, multiple axis accelerometers may be used.

Each earplug 1 includes a reference feature 11 to identify the approximate or general orientation preferred for the earplug when it is in position in an ear. Several reference features are described herein, and it will be appreciated to persons skilled in the art that other types of reference features may be used to identify orientation of the earplug for placing it in the ear and while it is in the ear. During use of the earplug 1, the reference direction 6 is defin3ed by positioning the earplug in an ear in the preferred orientation.

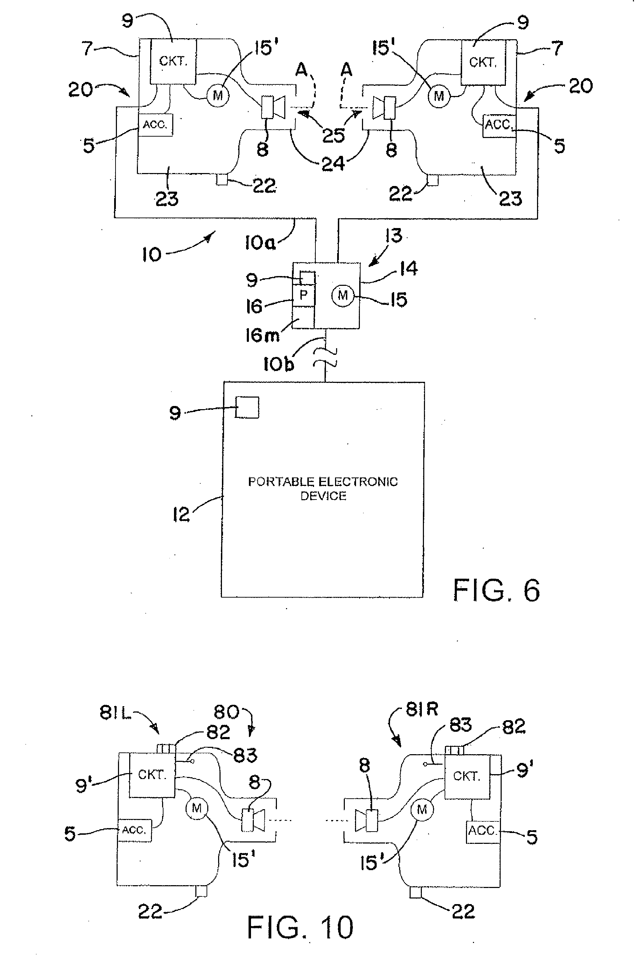

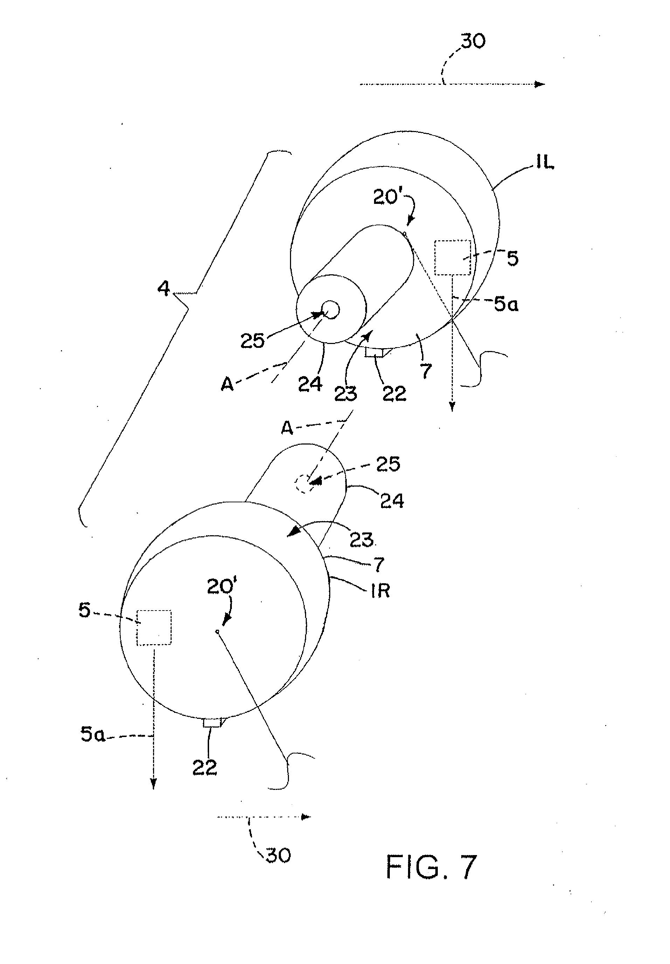

In operation each earplug 1 uses only the angle of the earplug according to some reference, e.g., the reference direction 6 or a reference location on the earplug, relative to the direction of the earth gravity vector 5a (predetermined direction). A typical earplug may be rotated around some axis, e.g., the axis A (Figs. 6 and 7) along which it is inserted into the ear or the axis on which the earplug may be supported by a mounting device, and so on; the rotation may be in different directions about such axis depending on which side of the head the earplug is placed.

The accelerometer is used to determine the angle of the gravity vector 5a (predetermined direction) relative to the earplug, e.g., the reference direction. If the angle is positive, the earplug is on one side of the head, and if the angle is negative, the earplug is on the other side of the head. See Figs. 1 and 2.

The accelerometer 5 will see that the earth gravity vector 5a is pointing in different directions depending on which ear it is placed in or adjacent. The exact placement and orientation of the accelerometer in the earplug is not significant, as long as it is fixed in the accelerometer housing and is the same in respective earplugs 1L, 1R.

The information indicating in which ear an earplug is located may be used for various purposes. For example, the information can be used to coordinate the sending of the correct left ear electrical signal to the earplug 1 L that is in the left ear 2L to produce sound for the left ear and of the correct right ear electrical signal to the earplug 1 R that is in the right ear to produce sound for the right ear 2R. Therefore, correct sounds may be provided the ears for listening to stereophonic music, 3D music, binaural music, stereo audio associated with a movie, and so on. Moreover, if the earplugs include a microphone, then realistic binaural recording can be done, as is described further below.

The accelerometer 5 in each earpiece 1 is used to determine what direction is downward. In combination with a mechanical design of the earpiece that makes it natural for the user to insert the earpiece with an angle in respect to the downward direct, e.g., by designing the cable or microphone housing to be directed slightly forward when inserted, this will give information to the system if the earpiece is in the right or left ear. Since human ears are mirrored between right and left side, if the downward direction is determined to be to the right of the cable or microphone housing, the downward direction is determined to the right of the cable or microphone, the earpiece is inserted into the left ear. If the downward direction is determined to be to the left of the cable or microphone housing, the earpiece is inserted in the right ear.

Signals or output from the accelerometers 5 of the earplugs 1 may be provided to circuitry 9 including, for example, one or more of logic circuitry, a processor configured by computer program instructions in a non-transitory memory 9M, and so on, configured to recognize which earplug is in which ear from the accelerometer output signals. The circuitry 9 and/or additional circuitry may be provided and configured to connector to direct respective signals to speakers 8 in the earplugs 1 to provide correct audio sounds to the left ear and right ear. Several examples of such circuitry are disclosed herein, but it will be appreciated that other circuitry and components of the circuitry (collectively referred to herein as circuitry) may be used to carry out the functions described herein.

Referring to Figs. 3-5, an earpiece (earplug) 1 is shown inserted in the ear 2 of a user 3. In Figs 3 and 4 only the left earpiece 1 L is seen; in Fig. 5 both earpieces 1 L, 1 R are seen. The earpiece 1 is shown as an earbud of a type typically partly or fully inserted in the ear 2 for use; other types of earpieces may be used, as is mentioned above.

As is shown in Fig. 5, the two earpieces 1 L and 1 R form a headset 4 that provides sounds to the respective ears 2 of the user 3. For example, stereophonic music may be provided by the speakers 8, and the user may hear predominantly string instruments at one ear and predominantly horns at the other ear to provide the impression that the user is in a concert hall listening to a music concert. Another type of stereophonic type of sound is referred to as 3D (three-dimensional) audio. In such case a sensor may track the direction a user is facing and changes in the facing direction, e.g., as the user may rotate his head from forward toward a side. In such case the music provided to and heard by the respective ears may be changed automatically based on the facing direction, thus also giving the impression of being at a concert.

The earpieces 1 illustrated in Figs 3-6 are connected via a wired connection using a wire or cable 10 (referred to as wire below) to a source 12 of signals to cause the earpieces to provide sounds to a user 3. The source 12 sometimes is referred to as an audio signal source. The source 12 for the sounds, e.g., the signals to cause earplugs to provide the sounds, may be, for example, a mobile phone, music player, PDA, radio, BT radio, video player, computer or some other type of portable electronic equipment, etc. The source 12 may be a relatively non-portable electronic equipment, e.g., a stereo music system or a computer. Moreover, although a wired connection using wire 10 is illustrated, it will be appreciated that various wireless connections may be provided instead of or in addition to the wired connection, e.g., Bluetooth connection, WiFi connection, and so on.

The connection of the earpieces 1 to the source 12 of signals may be via a connection device 13. The connection device 13 may be, for example, a microphone housing 14 that contains a microphone 15 to pick up voice sounds from the user 3 in the course of a telephone conversation or for recording or to pick up other sounds, as may be desired. In the microphone housing 14 there may be various circuitry 9, such as is mentioned above, for example a processor 16 and associated memory, logic or other circuitry, computer program instructions, ASIC, or the like to process signals provided to and/or received from the earplugs, e.g., as described herein.

The wire 10 includes a portion 10a from the earpieces 1 to the connection device 13 and another portion 10b from the connection device 13 to the source 12. Either or both wire portions 10a, 10b may be replaced by wireless connection, e.g., Bluetooth, WiFi or other wireless technology, as was mentioned above. Components for wireless connection may be in one or more of the earplugs 1, the connection device 13 and/or the source 12.

If the source 12 were a player or other device that does not need an associated microphone 15 or if some other arrangement for a microphone were provided, e.g., in a mobile phone, then the wire 10 may connect directly between the source 12 and the earplugs 1; and the connection device 13 may be eliminated, and some or all of the circuitry 9 may be located elsewhere, e.g., in the source 12 and/or in one or both earplugs 1.

The feature 11 of the earplug housing 7 indicates a preferred orientation of the earplug 1 to facilitate placing the earplug in that orientation in the ear 2. The feature 11 may be mechanical design, form factor, or paint or ink and so on.

An example of a feature 11 is the manner in which the wires 10 exit at 20 from the earplug housing 7. The wires may tend to face in a predetermined preferred or preferential direction or reference direction, e.g., as is shown in Figs. 3 and 4. The tendency for the wire portion 10a to face in a preferential direction 6 (Figs. 1 and 2) may be due to one or more of the form factor of the earplug housing 7, the stiffness and shape of the wire, and/or other factors so the earplugs and wire are worn relatively comfortably.

In the embodiment of Fig. 4 the earplug housing 7 has a feature 21 in the form factor including a protruding part (protrusion) 21 p that tends to cause the user 3 to insert the earplug 1 in a comfortable direction, e.g., facing forward rather that facing backward. The wire 10 may exit the protruding part 21 p, e.g., extending along the length thereof, or may exit the housing 7 independently of the protruding part. The facing direction of the wire 10 and/or of the protruding part 21 p may indicate the preferential direction mentioned herein.

A different feature 22, similar in function to the features 11 and 21, is shown in Fig. 6, as part of the earplug housing 7. The function of each of the features 11, 21 and 22 is to tend to guide or to indicate to a user how to place or to orient the earplug in or at an ear so that the earplug is placed to provide a correct preferential direction orientation. The feature 22 may be a bump (raised portion) or notch (recess) formed in a wall or surface of the housing 7. As another alternative, the feature 22 may be paint, ink or other indicia on the housing, and so on.

In using the earplugs, a user 3 inserts each earplug 1 of a headset 8 in a respective ear 2 such that the earplugs are oriented as guided by one or both of the features 11 or 21 or some other feature. Since the earplugs 1 are the same or substantially the same, the accelerometer 5 is located at the same or at least approximately the same relative location in each earplug housing 7 and the orientation of the accelerometer 5 in each housing is the same or at least substantially the same. The accelerometer 5 senses the downward direction, e.g., due to gravity, and provides an accelerometer output signal representative of its orientation with respect to gravity. Thus, the accelerometer output signal represents the relation of the orientation of the housing 7 in the ear to the gravity vector (predetermined direction; the relation mentioned above is referred to as angle alpha (∀). The orientation of the earplug 1 according to a reference direction (the preferential direction) in relation to the earth gravity vector (the predetermined direction) can be used to determine whether the earplug is located in the left ear or the right ear, as is described herein.

Human ears are mirrored between right and left side of the user's head. Therefore, in an example with the earplugs properly oriented generally in the preferred orientation in the left and right ears, respectively, the relationship of the predetermined and the preferential directions is determined and indicates which earplug is in which ear.

The processor 16 may coordinate which signals are provided to the respective earpieces based on which ear the earpiece is at, and, thus, which sounds are produced by respective earplugs.

As is illustrated in Figs. 6 and 7, each earpiece 1 includes a circular housing 7 having an interior 23 in which the accelerometer 5, speaker 8 and circuitry 9 are located. The form factor of the earplug housing 7 may be other than circular. Additional circuitry and/or components may be included in the housing, e.g., as is illustrated and described below with respect to Fig. 6. The earplug housing 7 also includes an insertion portion 24 from which sounds from the speaker 8 are conveyed into the ear 2. For example, the insertion portion 24 may be of a size, shape and material suitable to be inserted at least part way into the ear, e.g., into the ear canal; and when so inserted, the earpiece may be self supporting relative to the ear based on engagement of the insertion portion with the ear. The insertion portion 24 may be hollow or have a hollow passageway 25 to facilitate conveying sounds from the speaker 8 into the ear. The insertion portion may extend generally perpendicularly relative to or in an axial direction from (e.g., axially along axis A) the major extent of the housing 7.

The earpiece 1 may be of different form factor than as illustrated and may be wholly or partly inserted in an ear or may be positionable adjacent an ear to provide sounds to the ear.

The processor 16 along with other circuitry 9 for carrying out the functions described herein also may be included in the microphone housing 14. The processor 16 and circuitry may be configured to carry out processing of acceleration signals, e.g. due to gravity, and to detect relationship of the predetermined direction and preferential direction to determine in which ear respective earplugs 1 are located.

As is illustrated in Figs. 1-4 and 7, the earpiece 1 is designed to make it natural for the user 3 to insert the earpiece such that the reference or reference direction is at an angle in respect to the downward direction, e.g., by inserting the insertion portion 24 in a generally horizontal direction into the ear 2. For example, the mechanical design or form factor of the earplug 1 is such as to cause the user to position the earpiece such that the cable tends to extend somewhat forward in the direction of the arrows 30 (Fig. 7) toward the front of the user's head toward the face. The mechanical design of the earpiece may be such that the location and angle at which the wire 10 exits the housing 7 is generally fixed relative to the housing. If the reference 11 is other than the wire 10, the wire 10 need not be so fixed in position relative to the housing 7.

As an example, looking at Fig. 7 the location of the accelerometer 5 in the housing 7 of an earpiece 1 relative to the location of the wire 10 either is relatively forward or rearward of the location of the wire 10. Forward and rearward for convenience of this description is in the same or opposite direction, respectively, of the arrow 30. In the example just described the applied rule would be forward of the location of the wire 10 may be indicative of the earpiece 1 L being inserted in the left ear 2 of the user 3; rearward may be indicative of the earpiece 1 R being inserted in the right ear 2.

In using an audio headset 7 that includes a pair of earpieces 1, a user 3 would place each earpiece in a respective ear 2 so that a source 12 may provide signals to the earpieces 1 causing them to play sounds, e.g., music, dialog from a movie, sounds from a game, speech from a podcast, participation in a telephone conversation providing another person's speech to listen to, and so on. The earpiece housing 7 and/or the feature 11 or 21, e.g., wire 10, associated with the earpiece, for example, tends to cause the user 3 to place the earpiece 1 relative to the ear 2 in a preferential direction; or the user simply tends to place the earpieces in the ears in a manner such that the wire extends in a preferential direction. For example, as is illustrated in Figs. 1-5, using an earbud type earpiece 1 the earbud is inserted at least part way into the ear 2, e.g., the outer portion of the ear canal, and the wire 10 exits or "comes off" the earbud housing 7 in a preferential direction toward the front of the head, e.g., toward the face, of the user 3. Various techniques may be used to tend to cause a user to place the earbud in an ear such that the wire 10 exits the earbud housing in a preferential direction, and several exemplary techniques are described herein. For example, for the user's comfort, due to the typical shape of a human ear, the manner in which the wire 10 comes off an earbud housing may be most comfortable such that the wire tends to extend somewhat in a forward direction (30) from the ear, e.g., toward the front of the face rather than toward the back of the head, and the user may typically place the earbuds in the ears such that the wire comes off in such forward direction. Alternatively, instructions for using the earbuds may be provided to instruct a user to place both earbuds in the respective ears such that the wires 10 face in the same direction, e.g., toward the front (or, if desired, both toward the back in which case appropriate adjustment may be carried out to apply the opposite rule regarding which earbud is in which ear).

In Figs. 3-5 the earplug housings 7 have a circular cylindrical portion as illustrated and the wires 10 exit the respective earplug housings 7 at the exterior cylinder wall, the exit being shown at 20; and the manner in which the wires exit the housing may provide the feature 11 described above. In Figs. 6 and 7 the wires 10 exit the earplug housings 7 at the illustrated outside face of the circular cylindrical housing portion, as is indicated at 20'.

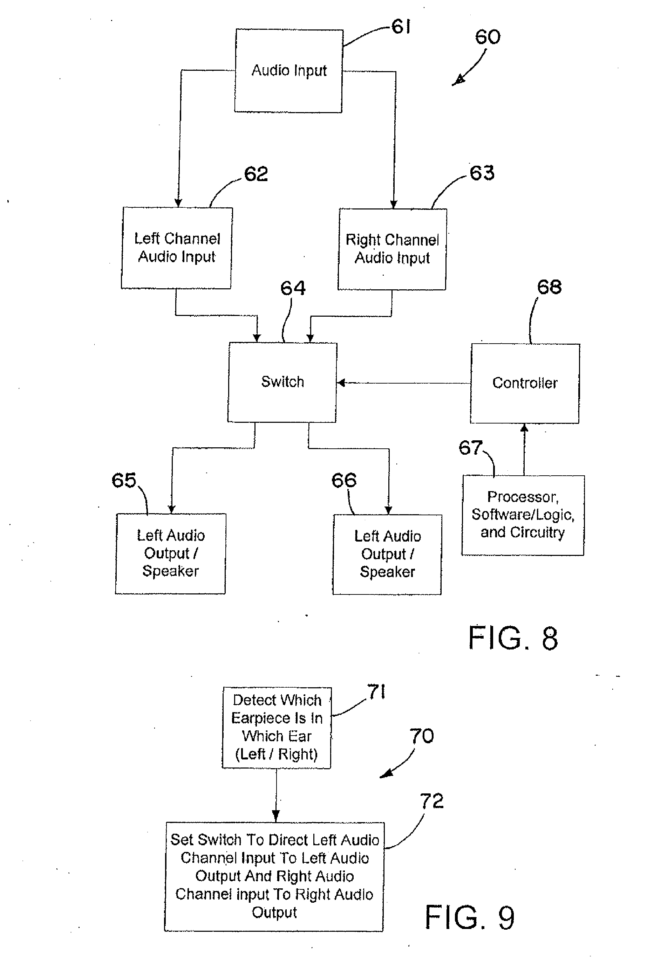

As is illustrated in Fig. 6 all or part of the circuitry 9 may be in one or both earplugs 1L, 1R, in the microphone housing 14 and/or in the source 12. Some of the functions of the circuitry 9 are described above and also are described below with respect to Figs. 8, 9 and 11. It is noted here that the circuitry 9 provides signals to the speakers 8 to provide output sounds from the earplugs 1. The circuitry 9 also receives accelerometer output signals and is able to decode or to determine from those signals in which ear respective earplugs are located. Further, based on the determination of which ear is the location for which of the earplugs, the circuitry 9 may direct respective left channel and right channel signals from the source 12 to the respective earplugs. The circuitry 9 including the processor 16 and computer program or logic instructions in the non-transitory memory 16m may control one or more of the various functions described herein to be carried out.

In Fig. 6 a microphone 15' is illustrated in the housing 7 of each earplug 1. The microphones 15' are electrically coupled to the circuitry 9, as shown. The microphones 15' detect, sense or pick up sounds that are received by the earplugs 1, and those sounds may be converted by the microphones to electrical signals that may be recorded by a suitable recording device, e.g., in the earplug, in the microphone housing 13, in the source 12 or at some other location.

A headset 4 with earplugs 1 having microphones 15' may be used for binaural recording. Tin that use case the microphones 15' in the earplugs 1 are arranged such that the sound reaching the microphones is very close to what would reach the eardrum of the user 3 while listening to sounds reaching the ears from an external source, such as a concert orchestra, outdoor nature sounds, etc. This arrangement provides for recording of sounds with a very realistic stereo feeling, since the user's head shape, outer ears, hair, beard, etc. will color or affect the sound. With a headset 4 having built-in microphones 15' for binaural recordings, it is desirable that the user has the correct earplug in the respective ears. The sounds received by the respective microphones 15' and the signals representing those sounds may be identified as to which earplug 1L, 1 R received the sounds using the left and right earplug identification functions described herein. Also, in playing back the sounds, the signals for the respective left ear and right ear as recorded may be directed to the correct left or right ear using features and functions described herein.

Referring to Fig 8, circuitry 60 represented by a schematic block diagram is illustrated. The circuitry 60 may be used for properly delivering signals for left and right audio output, e.g., sounds to be provided by respective speakers 8 according to the ear 2 at which respective earpieces 1 are placed. The audio input 61, e.g., signals, is received from the source 12. The audio input may include a left channel audio input 62 and a right channel audio input 63. The signals from the left and right channel audio inputs 62, 63 are delivered to a switch or switching circuit 64. The switching circuit 64 may be operated to deliver a respective left or right channel audio input to the correct left or right audio output or speaker 65, 66 (designated 8 in the respective earplugs 1L, 1 R described above). Thus, the left audio output /speaker 65 is associated with the earpiece 1 that is in, at or in proximity to the left ear 2L of a user 3 to provide sound to that ear; and the right audio output / speaker 66 is associated with the earpiece 1 in, at or in proximity to the right ear 2R of the user. Information pertaining to which earpiece 2 is in which ear is provided the processor, software/logic and circuitry 67, which is configured to respond to such information to identify which earpiece is in which ear of the user. The processor, software/logic and circuitry 67 may include circuitry 9, processor 16 and memory 16m and compute program instructions and/or logic to carry out the functions and operations described herein. The processor, software/logic and circuitry 67 provides an appropriate input to a controller 68, such as a switch control circuit or other circuit, which operates the switching circuit 64 to direct respective left and right channel audio inputs to the respective speakers 65, 66. The correct sounds then may be listened to by the user.

In Fig. 9 is an example of computer program software flow chart 70 or logic that may be used to operate the processor, software/logic and circuitry 67 shown in Fig. 8. At step 71 in the flow chart 70 the step of detecting which earpiece is in which ear (left or right) is carried out. At step 72 the switch 64 (Fig. 8) is set to direct the respective left and right channel audio inputs 62, 63 to the correct left and right audio outputs 65, 66. Therefore, the user 3 will hear the correct left or right ear sounds in the respective left or right ear 2.

Fig. 10 illustrates a self-contained headset 80. With the miniaturization of the parts of the earplugs 81 L, 81 R, each earplug of the headset 80 includes its own speaker 8, microphone 15', circuit 9', and manual input device 82. The circuit 9' may be substantially the same as or similar to the circuit 9 described above, e.g., including a processor, memory, computer program or logic and so on, but, in addition, the circuit 9' may include a BT radio and/or other radio, battery or other power supply, recording device/memory, and so on to store signals, such as those representing music, lectures, movie soundtracks, and so on. The circuit 9' also may record sounds sensed by the microphone 15'. The manual input device 82 may be operated by a user 3 to adjust volume, to change operation of the earplug, to change stations, to switch from a recording mode to a playing mode or vice-versa, and so on. The manual input device 82 may be coupled to respective control circuitry and/or devices in the circuit 9'. Further, an antenna 83 may be coupled to the circuit 9' to provide received radio signals, e.g., radio frequency or other radio signals from a source 12, for example, to the circuit 9' for playing via the speaker 8. The antenna 83 and circuit 9' also may be configured to provide operation as a mobile phone "built into the ear" with appropriate mobile phone components included in the circuit 9', for example, and the manual input device being operable to answer and hang-up phone calls and, if desired, also configured to provide dialing or other functions associated with a mobile phone. The earplugs 81 L, 81 R may include wireless capabilities to communicate with each other to identify which is in which ear based on the above-described operation. Knowing which earplug is in which ear, the correct left and right audio signals can be sent to the correct earplug.

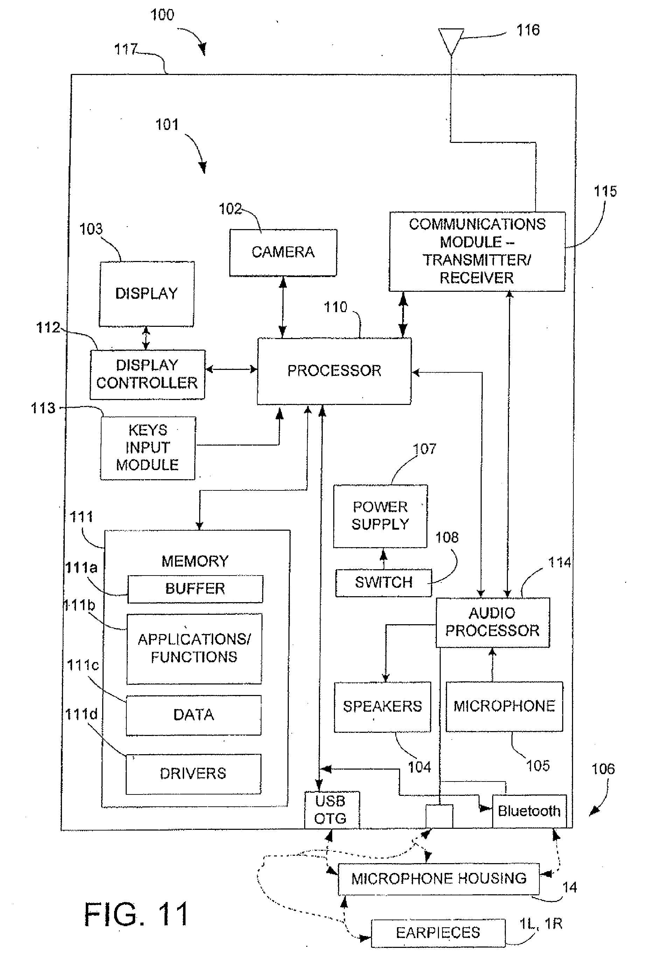

Fig. 11 illustrates an exemplary mobile phone 100 as an example of a source 12 that may use the audio headset 4 of Figs. 1-9, for example. The mobile phone 100 includes operating circuitry 101 and several additional components. Examples of additional components include a camera 102, display 103, speakers 104, microphone 105, external connector(s) 106, power supply 107 and power supply switch 108. The operating circuitry 101 includes, for example, processor 110, memory 111, including buffer, applications, data and drivers portions 111a-111d. A portion of the memory 111, e.g., the applications/functions portion 111 b may include a non-transitory memory in which computer program instructions or logic may be stored to configure and operate the processor 110 and/or other portions of the operating circuitry 101 to carry out the operation of the mobile phone in a conventional manner and/or in new manners as they are developed in the future. The operating circuitry 101 also includes a display controller 112 to interface between the display 103 and processor 110 to operate the display. A keys input module 113 of the operating circuitry provides for a manual inputting of signals to the mobile phone to carry out various functions, e.g., dialing functions. Further, the operating circuitry 101 includes an audio processor 114 for providing audio signals to the speakers 104 and to receive signals from the microphone 105; and the audio processor also may be coupled to the processor 110 and to a communications module-transmitter/receiver, 115, e.g., a radio, which operates in usual manner of a mobile phone via an antenna 116. The external connector 106 may connect the mobile phone to external devices such as the microphone 15 external of the mobile phone 100, e.g., in the microphone housing 13 or in the earplugs 1 (Figs. 3-7), earplugs 1 and/or other devices. Operation of the mobile phone 100 may be carried out in a usual manner using the earplugs 1 to provide sounds to the ears of a user 3. For example, the mobile phone 100 may be used for telephone conferences, for recording and/or playing back music, voice, and so on. The various parts of the mobile phone 100 may be contained within or otherwise associated with a mobile phone case or housing 117

The processor 110 may be a controller, processor, application specific integrated circuit or other device to carry out the operation and control functions of a mobile phone. The processor 110 also may respond to the accelerometer output signals to direct correct left and right channel signals to the correct earplugs 1L, 1R, as is described above.

Connections between the mobile phone 100 and the earpieces 1L, 1 R may be made via any of a number of devices, such as, wired, wireless or WiFi via the external connector 106 and/or via wireless components in the mobile phone 100 and/or in other parts described above, such as the earplugs 1 and/or the microphone housing 14.

In the several examples mentioned above, it will be appreciated that appropriate circuitry may be provided in the respective components mentioned as needed to carry out the signal coupling tasks, e.g., Bluetooth transmitters and receivers, amplifiers, switching circuitry, signal flow control circuitry, and so on.

Signals may be coupled in one direction or in both directions between the mobile phone (electronic device) 100 and the earpieces 1 L, 1 R. Coupling signals, whether by wired coupling or transmission or by a wireless coupling or transmission or by both wired and wireless or a combination thereof allows signals to be sent to the earpieces 1 to provide audio output to a user and signals to be received from the earpieces, e.g., from the accelerometers, for processing and/or other use in the portable electronic equipment 4, e.g., mobile phone 100.

Conveniently the earpieces do not require mechanical connection. Therefore, they may be relatively small, relatively low-power devices, relatively inexpensive, for example, as compared to typical headphone systems in which the various speaker components are mechanically connected in relation to each other by a bar, strap or the like.

It may be desirable for a user to be confident that the earplugs 1 are appropriately in position in his ears 2. Various detectors are available to detect that an earplug, such as an earbud, is properly in position in a user's ear. Capacitive sensors and infrared proximity sensors have been used in the past for this purpose. In an embodiment of the invention the output from such an "in position" sensor may be used to determine whether other portions of an earplug are turned on, operative and so on. For example, if an earpiece is not sensed as being in proper position, the speaker thereof and/or the direction sensor system may be turned off or turned to a reduced power level to avoid wasting power. Upon sensing proper positioning in an ear, the proximity sensor may provide an output that turns on or turns up operating power for the earpiece.

Operation of the mobile phone 100 in cooperation with the audio headset 4 may be under computer program control or the like. Such operation may be performed to carry out the functions of a mobile phone and as a playback system to provide sounds to the user 3, and the various steps, operations and procedures described above may be carried out under computer program control or the like.

It will be appreciated that portions of the present invention can be implemented in hardware, software, firmware, or a combination thereof. In the described embodiment(s), a number of the steps or methods may be implemented in software or firmware that is stored in a memory and that is executed by a suitable instruction execution system. If implemented in hardware, for example, as in an alternative embodiment, implementation may be with any or a combination of the following technologies, which are all well known in the art: discrete logic circuit(s) having logic gates for implementing logic functions upon data signals, application specific integrated circuit(s) (ASIC) having appropriate combinational logic gates, programmable gate array(s) (PGA), field programmable gate array(s) (FPGA), etc.

Any process or method descriptions or blocks in flow charts may be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

The logic and/or steps represented in the flow diagrams of the drawings, which, for example, may be considered an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

The above description and accompanying drawings depict the various features of the invention. It will be appreciated that the appropriate computer code could be prepared by a person who has ordinary skill in the art to carry out the various steps and procedures described above and illustrated in the drawings. It also will be appreciated that the various terminals, computers, servers, networks and the like described above may be virtually any type and that the computer code may be prepared to carry out the invention using such apparatus in accordance with the disclosure hereof.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means".

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. An earplug (1), **characterized by**:
a housing (7) positionable with respect to the ear of a user,
a speaker (8) positioned with respect to the housing (7) to provide sounds to the ear of a user,
an accelerometer (5) positioned with respect to the housing (7) and configured to sense a predetermined direction, wherein
the housing (7) is configured to facilitate the tendency for a user to position the housing (7) with respect to an ear with a portion of the housing (7) facing a predetermined direction, and
whereby the relation of the downward direction to the predetermined direction with respect to an ear is indicative of the left or right ear with respect to which the housing (7) is positioned.

2. The earplug (1) of claim 1, **characterized by**:
an electrical cable (10) exiting the housing and the housing and electrical cable configured to facilitate the tendency for a user to position the housing with respect to an ear with the electrical cable facing a predetermined direction,
whereby the relation of the downward direction to the predetermined direction with respect to an ear is indicative of the left or right ear with respect to which the housing is positioned.

3. The earplug (1) of either one of claims 1 or 2, **characterized in that** the predetermined direction sensed by the accelerometer (5) is downward due to gravity.

4. The earplug (1) of any one of claims 1-3, **characterized in that** the predetermined direction is facing generally forward of the ear without regard to which ear.

5. The earplug (1) of any one of claims 1-4, **characterized by** a microphone (15') in the housing (7).

6. An audio headset (4) comprising a pair of earplugs (1) of any one of claims 1-4, and **characterized by** a processor (16) configured to determine automatically the directing of sounds to the respective earplugs (1).

7. The audio headset (4) of claim 6, **characterized by** a source (12) of audio content, and **characterized in that** the processor (16) is configured to provide signals to the respective earplugs (1) to provide a stereophonic effect with right ear stereo sounds delivered to the right side earplug and left ear stereo sounds delivered to the left earplug.

8. The audio headset (4) of either one of claims 6 or 7, **characterized in that** the accelerometer (5) of each earplug (1) is positioned in substantially the same location and orientation in the housing (7) of each respective earplug (1).

9. The audio headset (4) of any one of claims 6-8, **characterized in that** each earpiece (1) includes a microphone (15'), and **in that** the processor (16) is configured to identify the sounds received by respective microphones (15') with the respective left or right ear at which the sounds are received.

10. A method of determining which of two earplugs (1) is positioned at which respective ear of a user, **characterized by**:
positioning each of the earplugs (1) at an ear such that at least a prescribed part of the earplug (1) or a wire (10) attached to the earplug (1) faces a predetermined direction,
determining whether for at least one of the earplugs (1) the direction of a downward direction is relatively to the right or to the left of the predetermined direction with the earplug (1) in use position at an ear as a representation of whether the earplug (1) is in the left ear or the right ear.

11. The method of claim 10, wherein said determining comprising using an accelerometer (5) in the earplug (1).

12. The method of either one of claims 10 or 11, further comprising receiving signals to produce stereophonic sounds by the respective earplugs (1), and automatically determining to send right side stereophonic sounds to the earplug (1) that is positioned at the right ear of a user and to send left side stereophonic sounds to the earplug (1) that is positioned at the left ear of the user.

13. A sound recording method including placing each of a pair of earplugs (1) of a headset (4) in a respective left or right ear, automatically detecting which earplug (1) is in which ear, each earplug (1) including a microphone (15'), the sounds recorded by respective microphones (15') being identified with the respective left or right ear at which the sounds are received.

14. A sound recording system, **characterized by** a pair of earplugs (1) according to any of claims 1-5, and being positionable in or at respective ears of a user, an indicator indicating automatically in or at which of the ears the earplugs (1) are located, a microphone (15') in each earplug (1) to receive sounds, and circuitry (9) configured to identify respective ears at which the respective sounds are received.

15. An earplug apparatus for an audio headset (4) according to any of claims 6-9, **characterized by** a housing (7), a speaker (8), an accelerometer (5), and a reference identifier to indicate a preferred orientation of the housing (7) with respect to an ear, and wherein the accelerometer (5) and the reference identifier are cooperative when the earplug (1) is in position to provide sounds to an ear to identify at which ear the earplug apparatus is located.
